# EUROPÄISCHE PATENTANMELDUNG

(11) **EP 2 784 011 A1**
(43) Veröffentlichungstag der Anmeldung: **01.10.2014**
(21) Anmeldenummer: 13405039.2
(22) Anmeldetag: 26.03.2013
(51) Int. Cl.: B65H 29/00, B65G 45/18, B65G 45/24

(54) **Vorrichtung zur Reinigung einer Fördereinrichtung für Druckprodukte**

(71) Anmelder: Baer, Hansrudolf, 6052 Hergiswil (CH)
(72) Erfinder: Baer, Hansrudolf, 6052 Hergiswil (CH)
(74) Vertreter: Fenner, Werner

(57) **Zusammenfassung**

Bei einer Vorrichtung zur Reinigung einer Fördereinrichtung (1) für Druckprodukte (2), die zur weiteren Verarbeitung in an einem umlaufenden Zugmittel (3) in Abständen hintereinander befestigten, schliess- resp. öffenbaren Klammern (4) im Randbereich einer Bogenkante gehalten und quer zur Förderrichtung (T) ausgerichtet sind, ist das angetriebene Zugmittel (3) in parallelen Führungsbahnen (5 bis 7 resp. 5' bis 7') einer Führungsanordnung (15) durch frei drehbar gelagerte Laufrollen (13, 14) resp. Laufrollenpaare und/oder Führungsrollen (16) formschlüssig geführt ist, wobei in Förderrichtung (T) betrachtet zwischen zwei Laufrollen (13, 14) resp. Laufrollenpaaren und/oder Führungsrollen (16) wenigstens eine entlang einer Lauf- (24, 25) resp. Führungsfläche (29, 30) der Führungsbahnen (5 bis 7 resp. 5' bis 7') auf diese reinigend wirkende Räumvorrichtung (31, 37, 38) an dem Zugmittel (3) befestigt ist.

## Beschreibung

Die Erfindung betrifft eine Vorrichtung zur Reinigung einer Fördereinrichtung für Druckprodukte, die zur weiteren Verarbeitung in an einem umlaufenden Zugmittel in Abständen hintereinander befestigten, schliess- resp. öffenbaren Klammern im Randbereich einer Bogenkante gehalten und quer zur Förderrichtung ausgerichtet sind, wobei das Zugmittel in parallelen Führungsbahnen durch frei drehbar gelagerte Laufrollen resp. Laufrollenpaare und/oder Führungsrollen formschlüssig geführt ist.

Fördereinrichtungen für Druckprodukte dienen der Herstellung von Druckerzeugnissen wie Zeitschriften, Zeitungen, Büchern und Broschuren, die geheftet, eingesteckt oder gebunden vorkommen resp. in den Vertrieb gelangen.

Bei der Herstellung von Zeitungen werden Teil- resp. Vorprodukte oder Beilagen, beispielsweise aus Zwischenspeichern resp. -ablagen auf separaten Förderwegen umlaufenden Einstecktaschen einer Einsteckmaschine zugeführt, wobei die Teilprodukte, in ein geöffnetes Hauptprodukt in der Einstecktasche eingesteckt werden. Es wird in diesem Zusammenhang auf die EP 0 990 535 A1 verwiesen.
Dadurch entstehen lange Förderwege über die täglich jeweils mehrere hunderttausend Teil- resp. Vorprodukte bewegt werden.

Der Transport der Teil- resp. Vorprodukte erzeugt ein erhebliches Mass an Papierstaub, der sich vereint mit Druckfarbe und Luftfeuchtigkeit in den Führungsbahnen der Fördereinrichtungen absetzt sowie festsetzt und im Verlauf der Zeit eine unzugängliche Schicht bildet, die sich kaum von den Laufflächen entnehmen lässt. Dadurch wird der Transport der Druckprodukte beeinträchtigt und die räumliche Umgebung mit einem unangenehmen, gesundheitsschädlichen Geruch belastet.
Die Brandgefahr in den Fördereinrichtungen ist aufgrund des Vorkommens von Papierstaub nicht zu unterschätzen.
Die sich mit der Zeit aushärtende Schicht führt auch zu Schäden an der Fördereinrichtung, insbesondere den Führungsrollen, die mit geringem Laufspiel in den kulissenartigen Führungsbahnen fortbewegt werden.
Durch die relativ hohe Transportgeschwindigkeit der Druckprodukte wird das Staubvorkommen intensiviert und reicht von der Decke bis zum Boden eines Produktionsraumes, der oft an einen Druckraum angrenzt resp. mit diesem verbunden ist. Insbesondere der Zeitungsdruck auf ungestrichenen Papieren erzeugt einen Papierstaub, der sich in den annähernd unzugänglichen Führungsbahnen der Fördereinrichtung niederschlägt.

Auch Schmiermittel und die Luftfeuchtigkeit vermischen sich mit dem Papierstaub zu einer klebrigen Masse und begünstigen den unerträglichen Missstand.

Ein manuelles Reinigen der Fördereinrichtungen wäre nur bei nahezu vollständiger Zerlegung, also bei einem mehrtägigen Unterbruch des Betriebes und mit hohen Kosten möglich.

Eine zusätzliche Herausforderung zur Reinigung einer Fördereinrichtung stellt sich im Bereich einer Verabeitungseinrichtung, nachdem die Druckprodukte, vorzugsweise in einem Schuppenstrom und falzvoran eine Druckmaschine verlassen haben. Üblicherweise wird diese Formation in einer Annahmestation von Klammern aufgenommen, die an einer durchlaufenden Förderkette mit geringerer Fördergeschwindigkeit als der in gleicher Richtung fortbewegte Schuppenstrom und in einer in Förderrichtung rückwärtigen Offenstellung der Klammern diesen zugeführt. Insbesondere beim Erfassen der Druckbogen in eine Schleppposition und danach beim Verlassen der Annahmestation in eine Hängelage fällt von den Druckprodukten feiner und/oder flockiger Papierstaub, zum Teil gemischt mit Druckfarbe, Lösungs- oder Schmiermitteln nach unten und setzt sich am Boden und/oder an Teilen der Annahmestation fest. Von dieser unausweichlich anfallenden Verschmutzung wird das Personal eines Versandraumes und die Umgebung belastet. Es sind Fälle bekannt, die beim Personal zu Bindehautentzündungen geführt haben.
Es ist deshalb von Bedeutung, dass die über das Druckwerk anfallende Verunreinigung an Druckprodukten nicht auf die Verarbeitungseinrichtungen, Personal und Umgebung übertragen wird resp. eine Übertragung frühzeitig weitgehend verhindert werden kann.
Solche Fördereinrichtungen beschreiben sind in den CH 588 647 A5, EP 1 557 387 A1, EP 0 806 392 A2 und EP 1 717 179 A1 beschrieben und dargestellt.
Es ist Aufgabe der vorliegenden Erfindung, eine Vorrichtung der eingangs beschriebenen Art zu schaffen, mit der die oben aufgeführten Mängel und Unzulänglichkeiten Weitestgehend behoben werden.

Erfindungsgemäss wird die Aufgabe dadurch gelöst, dass in Förderrichtung zwischen zwei Laufrollen resp. Laufrollenpaaren und/oder Führungsrollen wenigstens eine entlang einer Lauf- resp. Führungsfläche der Führungsbahnen auf diese reinigend wirkende Räumvorrichtung an dem Zugmittel befestigt ist. Damit können eine Behinderung des Transportes durch Papierstaub und andere schädliche Stoffen und Mittel an der Führungsanordnung einer Fördereinrichtung weitestgehend ausgeschlossen oder Ablagerungen an bestehenden Förderanlagen durch einen nachträglichen Einbau von Räumvorrichtungen abgebaut werden.

Es erweist sich als vorteilhaft, wenn bei einem aus mehreren gelenkig verbundenen Kettengliedern einer Förderkette ausgebildeten Zugmittel, welche Förderkette durch den Kettengliedern zugeordnete Laufrollen resp. Laufrollenpaare und/oder Führungsrollen in der die Führungsbahnen bildenden Führungsanordnung geführt ist, wenigstens eine Räumvorrichtung über einer Lauf- resp. Führungsfläche der Laufrollen resp. Führungsrollen einer Führungsbahn und auf diese reinigend wirkend an einem Kettenglied der Förderkette befestigt ist, sodass eine Verschmutzung verhindert resp. vorhandener Schmutz abgebaut werden kann.

Die Räumvorrichtung kann statisch oder dynamisch wirkend angeordnet sein, d.h., es kann eine stehende oder eine sich bewegende, beispielsweise rotierende Räumvorrichtung verwendet werden. Hierzu können Räumelemente wie beispielsweise auf die zu reinigenden Oberflächen gerichtete Borsten einer Bürste oder Mitnehmer die still stehen oder sich bewegen.
Zweckmässig sind die Räumelemente so an einem Halter der Räumvorrichtung angeordnet, dass sie eine seitliche Förderkomponente erzeugen, wodurch das abzutragende Material zur Seite, beispielsweise gegen eine Wand der Führungsbahnen gefördert wird.

Vorzugsweise ist anstelle einer Lauf- resp. Führungsrolle eine Räumvorrichtung an einem Kettenglied vorgesehen, das aufgrund eines Verschleisseffektes vorzugsweise auswechselbar ist.

Die Räumvorrichtung kann als Bürste wirkend ausgebildet sein, die sich zur Räumung des Papierstaubes oder klebriger Masse besonders gut eignet.

Alternativ könnte die Räumvorrichtung mit einem Mitnehmer ausgebildet sein, mit dem das abgetragene Material schneepflugartig geräumt werden kann.

Vorteilhaft könnte einer Räumvorrichtung eine einen Mitnehmer aufweisenden Räumvorrichtung nachgeschaltet sein, die liegengebliebenes Material schneepflugartig erfasst.

Zweckmässig könnte die mit einem Mitnehmer versehene Räumvorrichtung an einem dem Kettenglied einer Räumvorrichtung nachfolgenden Kettenglied befestigt sein.

Vorzugsweise ist entlang der Führungsanordnung eine auf die Führungsbahnen wirkende Absaugvorrichtung vorgesehen, die den von den Lauf- und Führungsflächen losgelösten und anfallenden Papierstaub entfernt.

Es erweist sich als vorteilhaft, wenn entlang der Führungsanordnung mit der Absaugvorrichtung verbundene Zugangsöffnungen an den Führungsbahnen angeordnet sind, über die der Papierstaub abgesaugt wird.

Zweckmässigerweise sind die Zugangsöffnungen der Absaugvorrichtung an der Seite der Führungsanordnung festgelegt, sodass der Druckbogentransport ungestört bleibt.

Bei übereinander beabstandeten Förderkettentrums kann unterhalb des oberen

Trums eine Absaugvorrichtung mit einer Zugangsöffnung in die Führungsanordnung förderwirksam verbunden sein, sodass von dem oberen Förderkettertrum der Staub nicht in das untere Förderkettentrum fallen kann.

Bei einer Vorrichtung zur Reinigung einer Fördereinrichtung und durch diese transportierte Druckprodukte, die zur Verarbeitung an einem umlaufenden Zugmittel in regelmässigen Abständen hintereinander in schliess- und öffenbaren Klammern falzseitig gehalten und quer zur Förderrichtung ausgerichtet sind, wobei das angetriebene Zugmittel in parallelen Führungsbahnen einer Führungsanordnung durch frei drehbar gelagerte Laufrollen resp. Laufrollenpaare und/oder Führungsrollen formschlüssig geführt ist und eine einer Druckmaschine nachgeschaltete Annahmestation durchläuft, der die Druckprodukte in einem Schuppenstrom falzvoran zugeführt und von Klammern der Fördereinrichtung am Falz erfasst und zum weiteren Transport in eine Hängelage umgelenkt werden, erweist es sich als vorteilhaft, wenn der Erfassungs- und in Förderrichtung (T) betrachtet folgende Umlenkabschnitt der Annahmestation (51) durch eine die in Klammern (4) gehaltenen, die Annahmestation (51) durchlaufenden Druckprodukte (2) umgebende, mit einer Vakuumquelle (57) resp. Absaugvorrichtung verbundene Kammer (56) ausgebildet ist, sodass der nach dem Erfassen der Druckprodukte aus einem Förder- resp. Schuppenstrom und einer anschliessenden Lageänderung der Druckprodukte anfallende Papierstaub unmittelbar abgesaugt werden kann.

Vorzugsweise ist die Klammer teilweise geschlossen ausgebildet, sodass im begrenzten Raum ein hoher Absaugeffekt entstehen kann.

Zweckmässig ist in einer Verbindungsleitung (59) zwischen Kammer (56) und Vakuumquelle (57) oder nach der Vakuumquelle (57) ein Abscheider (58) für Feststoffe vorgesehen, mit der letztere trennbar sind.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine ausschnittweise Seitenansicht eines Förderbereichs der in Fig. 5 dargestellten, umlaufend angetriebenen Fördereinrichtung für Druckprodukte,
- Fig. 2: eine Ansicht gemäss Pfeil X von unten des in Fig. 1 dargestellten Förderbereichs der Fördereinrichtung,
- Fig. 3: einen Querschnitt durch das obere Förderkettentrum der Fördereinrichtung nach der Linie in III - III in Fig. 2,
- Fig. 4: auszugsweise einen Querschnitt durch die FördereinRichtung bei einer Führungsanordnung mit verbundenen Führungsbahnen,
- Fig. 5: auszugsweise eine Seitenansicht der Fördereinrichtung mit einem oberen und unteren Förderkettentrum,
- Fig. 6: eine Räumvorrichtung,
- Fig. 7: eine alternative Räumvorrichtung und
- Fig. 8: eine Annahmestation, in der die Druckprodukte aus einer liegenden in eine hängende Schuppenformation umgelenkt werden.

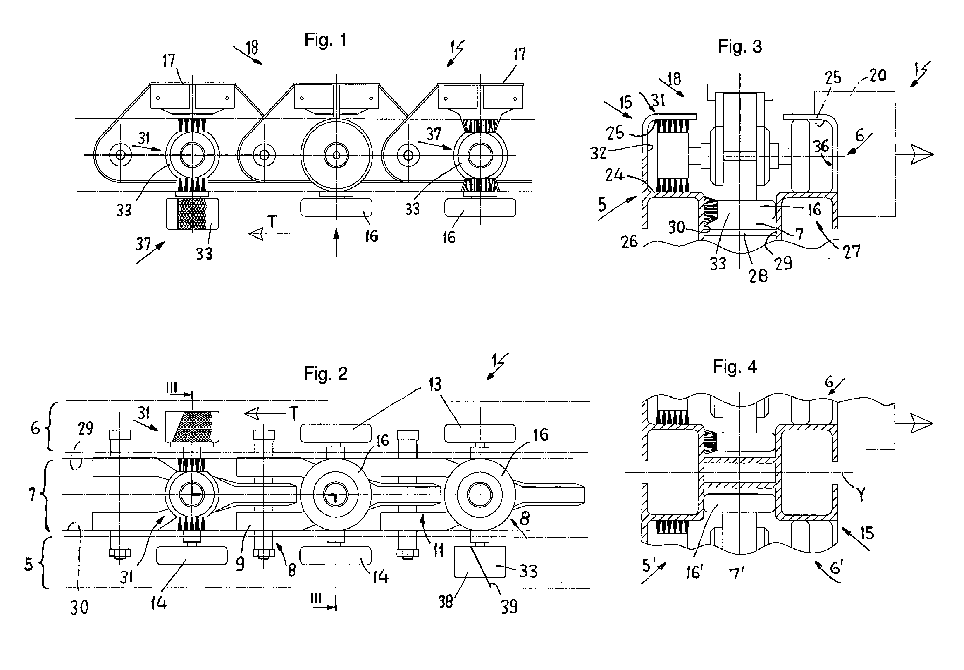

Die Fig. 1 bis 5 vermitteln auszugsweise eine Vorrichtung zur Reinigung einer Fördereinrichtung 1 für Druckprodukte 2 oder zur Räumung einer Fördereinrichtung von durch die Herstellung von Druckprodukten entstehenden, schmutzbelasteten Abfällen der Papier- und Druckindustrie, welche Druckprodukte 2 zur weiteren Verarbeitung in an einem umlaufenden Zugmittel 3 in Abständen hintereinander befestigten, schliess- und öffenbaren Klammern 4 im Randbereich einer Bogenkante, vorzugsweise dem letzten Falz gehalten und quer zur Förderrichtung T ausgerichtet sind, wobei das Zugmittel 3 in parallelen Führungsbahnen 5 bis 7 resp. 5' bis 7' geführt ist. Das dargestellte Zugmittel 3 besteht aus einer Förderkette mit in Förderrichtung T hintereinander zusammenhängenden Kettengliedern 8, die zu ihrer Koppelung einenends ein gabelförmiges Verbindungselement 9 und anderenends eine Verbindungslasche 10 aufweisen und die in dem gabelförmigen Verbindungselement 9 an einem letzteres durchsetzenden, ein Gelenk 11 bildenden Kettenbolzen 12 angelenkt sind. Das Gelenk 11 ist mit einer kugeligen Büchse (nicht ersichtlich) versehen, sodass eine raumgängige Förderkette 3 entsteht. Zwischen den Kettenbolzen 12 sind an den Kettengliedern 8 seitliche Laufrollen 13, 14 frei drehbar gelagert, die die motorisch angetriebene Förderkette 3 in einer Führungsanordnung 15 tragen. Eine weitere Laufrolle 16, die senkrecht zur Achse der Lauf- resp. Führungsrollen 13, 14 angeordnet ist, dient den Seitenführung der Förderkette 3 in der Führungsanordnung 15. Die Klammern 4 sind jeweils an einem Sockel 17 der Kettenglieder 8 befestigt und ihre Ausbildung und Anordnungsweise brauchen hier nicht speziell beschrieben werden, da sie zum Stand der Technik gehören und von bekannten Firmen als Fördereinrichtungen der Bezeichnung Transporteur hergestellt und vertrieben werden.

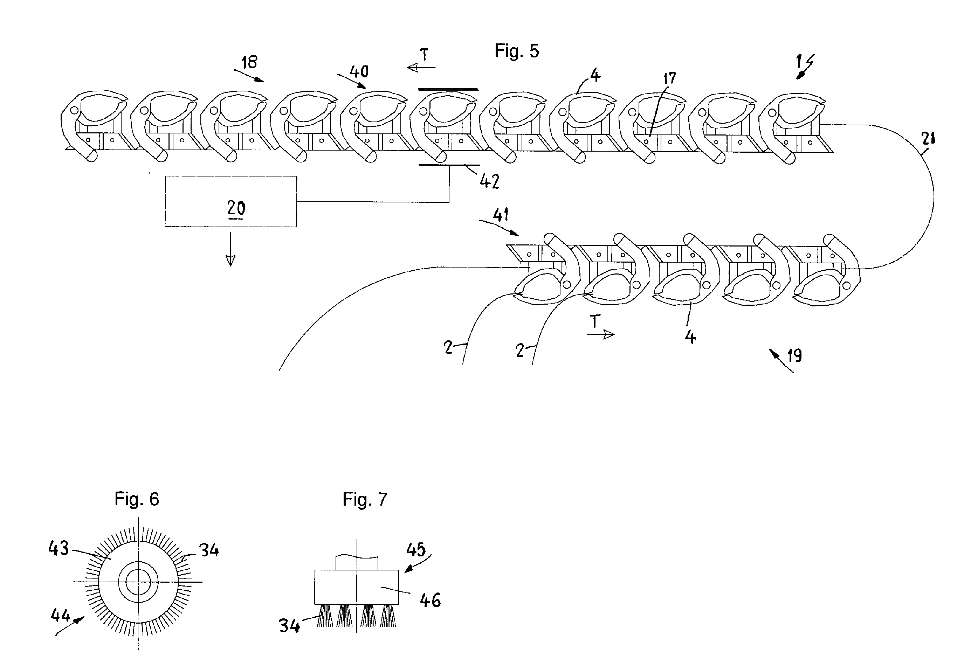

Die Fig. 5 veranschaulicht eine derartige Fördereinrichtung 1 und stellt den zurücklaufenden Förderkettenstrang18 mit leeren Klammern 4 und den mit aufgenommenen Druckprodukten 2 förderwirksamen Förderkettenstrang 19 der Förderkette 3 dar, wobei die Förderkette 3 auf dem strichpunktiert dargestellten Wendeabschnitt in der Praxis auf einer erheblich grösseren Wendeschlaufe als dargestellt umgelenkt wird. Alle Lauf- oder Führungsrollen 13, 14 16, weisen vorteilhaft den gleichen Durchmesser auf, sodass sie untereinander austauschbar sind.
Die mehrfache Führung resp. Abstützung der Förderkette 3 erfolgt u.a. aus Sicherheitsgründen oder zur Minderung der Unfallgefahr innerhalb der Führungsanordnung 15 der Fördereinrichtung 1 auf räumlich gekrümmten und/oder geraden Förderabschnitten. Die Förderkette könnte auch im Rahmen des Fachwissend des hier Schreibenden Ingenieurs in einer Führungsanordnung mit nach aussen offenen Führungsbahnen mit einer entsprechend angepassten Lagerung der Lauf- und Führungsrollen ausgebildet sein.
Fig. 3 zeigt einen etwa halben Querschnitt der Fördereinrichtung 1 im Bereich einer strichpunktiert dargestellten pneumatischen Absaugvorrichtung 20, deren Funktion anschliessend zu beschreiben ist.
Die Fig. 1 bis 4 vermitteln eine Ausführungsform der aus mehreren Führungsbahnen 5 bis 7 resp. 5' bis 7' gebildeten Führungsanordnung 15.
Die Fig. 1 und 2 zeigen in strichpunktierten Linien die Höhe und die Breite der Führungsbahnen 5, 6 der Laufrollen 13, 14 resp. Fig. 2 stellt die Breite der Führungsbahn 7 der Einzelrolle 16 dar.
Die Führungsanordnung 15 besteht aus jeweils einer resp. aus zwei an einer Symmetrieebene Y spiegelbildlich angeordneten, dem Förderkettenstrang 18 resp. 19 zugeordneten, die Führungsbahnen 5 bis 7 resp. 5' bis 7' aufweisenden Stahlprofilkonstruktion/en, wobei dem rücklaufenden leeren Förderkettenstrang 18 die das obere Förderkettentrum 40 der Förderkette 3 aufnehmende resp. stützende Stahlprofilkonstruktion und dem fördernden Förderkettenstrang 19 der Förderkette 3 die das untere Förderkettentrum 41 aufnehmende Stahlprofilkonstruktion zugeordnet ist. Damit insbesondere bei übereinander beabstandet verlaufenden Förderkettentrums 40, 41 der Förderkette 3 (Fig. 5), der Staub von den Klammern 4 und/oder Druckbogen 2 des oberen Trums nicht auf das untere Trum fallen kann, ist zumindest unterhalb des oberen Förderkettentrums 40 entlang letzterem wenigstens eine Zugangsöffnung 36 für den Anschluss einer auf die Führungsbahnen 5' bis 7' wirkenden Absaugvorrichtung 20 vorgesehen.
Die dem in Fig. 4 dargestellten Förderbereich der Klammern 4 entnehmbaren zwei spiegelbildlich gegenüberliegenden Stahlprofilkonstruktionen, von denen eine Hälfte über der Symmetrieebene Y in Fig. 3 festgehalten ist, weisen formschlüssige Führungsbahnen 5 bis 7 resp. 5' bis 7' auf, in denen die Laufrollen 13, 14 und die Führungsrollen 16 der Förderkette 3 mit geringem Führungsspiel geführt sind. Das nach innen offene Profil der Führungsbahnen 5, 6 resp. 5', 6' gleicht einem U-Träger mit parallelen Innenflächen, die die Lauf- resp. Führungsflächen 24, 25 der Laufrollen 13, 14 bilden. Die Führungsrolle 16 eines Kettengliedes 8 ist jeweils frei drehend um eine senkrecht zur Achse der Laufrollen 13, 14 an dem Kettenglied 8 und zwischen zwei senkrecht zu den Lauf- und Führungsrollen 13, 14 sich mit dem Rücken gegenüberstehenden, C-förmigen, Lauf- und Führungsflächen 29, 30 bildenden Trägern 26, 27 geführt. Von diesen ist in Fig. 3 die obere Hälfte dargestellt. Weiterhin zeigt die Fig. 3 oberhalb der Symmetrieebene Y gemäss Fig. 4 eine 28 von zwei Verbindungsplatten, durch die die Träger 26, 27 unterhalb (resp. oberhalb) der Führungsrollen 16 befestigt sind.
Die Fig. 1 bis 4, 6 und 7 zeigen verschiedene Ausführungen von an einzelnen Kettengliedern 8 befestigten, den Führungsbahnen 5 bis 7 resp. 5' bis 7' zugeordneten Räumvorrichtungen, die auf die Lauf- und Führungsflächen und/oder darüber hinaus sowie an bestimmten Wänden der Führungsbahnen eine Reinigungswirkung ausüben. Deshalb ist oder sind die Räumvorrichtung/en in die Reihe der Lauf- und/oder Führungsrollen 16 einzuordnen, so dass sie die Lauf- und Führungsflächen 24, 25 und 29, 30 resp. die Führungsbahnen von Papierstaub, ölhaltigen Stoffen und anderem, zum Teil feuchtem Schmutz freihalten. Zu diesem Zweck sind die Kettenglieder 8 mit Räumvorrichtungen ausgestattet, die an den die Lauf- und Führungsflächen 24, 25, 29, 30 sowie Wände 32 aufweisenden Führungsbahnen 5 bis 7 resp. 5' bis 7' reibschlüssig entlang geführt werden. Die Fig. 1 bis 4, 6 und 7 zeigen Räumvorrichtungen, die unterschiedlich ausgebildet sind.
In Fig. 1 ist eine Räumvorrichtung 31 dargestellt, die an einem anstelle einer Laufrolle 13, 14 befestigten Halter 33 büschelweise Borsten 34 aufweist, die sich zumindest bis an die Laufflächen 24, 25 erstrecken und letztere von Fremdkörpern resp. Schmutz befreien. Da die Borsten 34 elastisch ausgebildet sind, können sie mit einer Vorspannung an den Lauf- und Führungsflächen anstehen und einen stärkeren Reinigungseffekt erzeugen.
Durch eine in Fig. 2 dargestellte besondere Borstenanordnung, könnte der Schmutz auch nach der Seite verschoben resp. entlang einer Seitenwand 32 der Führungsbahnen transportiert werden, um anschliessend von einer als black box dargestellten Absaugvorrichtung 20 aus den Führungsbahnen 5 bis 7 resp. 5' bis 7' resp. der Führungsanordnung 15 entfernt zu werden. Die an einer, vorzugsweise mehreren Stellen entlang der Führungsanordnung 15 vorgesehenen Absaugstellen erzeugen an einer Zugangsöffnung 36 in den Führungsbahnen eine hohe Saug- bzw. Reinigungsleistung.

Fig. 1 zeigt weiterhin eine alternative Räumvorrichtung 37, nach der die Borsten bürstenartig resp. regelmässig verteilt an einem Halter 33 abstehend befestigt sind, wobei auch bei dieser Räumvorrichtung zur Erzielung eines grösseren Reinigungseffektes die Borsten vorgespannt sein können.

Fig. 2 veranschaulicht eine Räumvorrichtung 31 nach der oben beschriebenen Art, die auf die Lauf- und Führungsflächen 29, 30 der Führungsbahn 7 gemäss Fig. 3 einwirkt.

In Fig. 3 ist eine Räumvorrichtung 38 ersichtlich, die einen an einem Halter 33 befestigten Mitnehmer 39 aufweist, dessen freistehende, reibschlüssige Kante an der Lauf- und Führungsfläche 24, 25, 29, 30 ansteht resp. elastisch ansteht.

Die mit einem Mitnehmer 39 ausgestattete Räumvorrichtung 38 könnte einem dem Kettenglied 8 einer Räumvorrichtung nachfolgenden Kettenglied 8 befestigt sein, um eine schneepflugähnliche Wirkung auf das abzustossende, teilweise klebrige Material auszuüben.

Um die Klammern 4 von Staub fernhalten resp. reinigen zu können, ist im Zusammenhang mit den getroffenen Vorkehrungen zur Reinigung der Führungsanordnung 15 resp. der Führungsbahnen 5 bis 7 resp. 5' bis 7' der Fördereinrichtung 1 gemäss Fig. 5 wenigstens entlang des oberen Förderkettentrums 40, das leere Klammern 8 aufweist, ein die Fördereinrichtung 1 umgebendes Tunnel 42 vorgesehen, dessen Innenraum an eine Absaugvorrichtung 35 angeschlossen ist.
Die weiteren Fig. 6 und 7 vermitteln alternative Ausführungen der Räumvorrichtung. Fig. 6 veranschaulicht eine kreisrunde Bürste mit an einer Nabe 43 radial abstehenden, gegen die Lauf- und Führungsflächen gerichteten Borsten 34 aus einem metallischen oder nichtmetallischen Werkstoff wie schon die zuvor beschriebenen Räumvorrichtungen. Eine solche Räumvorrichtung 44 kann um die Achse frei drehend gelagert oder fest an einem Kettenglied 8 befestigt sein.

Fig. 7 zeigt eine als Topfbürste ausgebildete Räumvorrichtung 45, deren hier gebündelt dargestellten Borsten 34 gegen die zu reinigenden Flächen gerichtet resp. an letzteren vorgespannt anstehen, wobei diese Räumvorrichtung 45 drei drehend um eine Achse 46 oder starr an einem Kettenglied 8 befestigt sein kann.

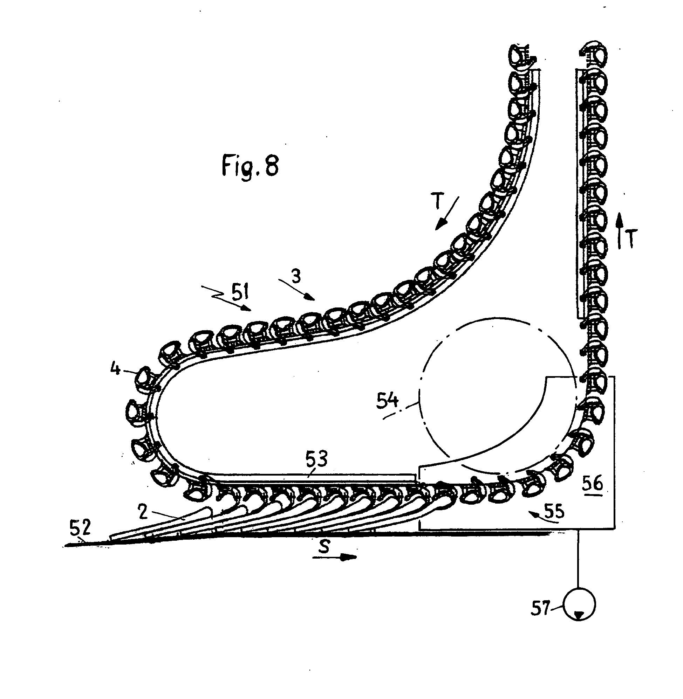

Fig. 8 zeigt in Verbindung mit Fig. 5 eine Förderkette 3 im Bereich einer Annahmestation 51, in der die mittels Förderband 52 oder dgl. von einem Druckwerk in einer Schuppenformation einer Annahmestation 51 zugeführt werden. Die Förderkette 3 der Fördereinrichtung 1 durchläuft in einer bekannten (stiefelförmigen) Schlaufe die Annahmestation 51 mit geöffneten Klammern 4, in die die Druckprodukte 2 mit dem Falz voraus eingeführt werden. Klammer 4.1 hat sich nach Verlassen der Steuerbahn 53, die für die Öffnungsbewegung und Offenhaltung der Klammer 4 bestimmt ist, geschlossen resp. einen Druckbogen kraftschlüssig erfasst. Die nun anschliessend in einem Bogen von etwa 90° oder weniger mittels Umlenkrad 54 senkrecht nach oben weiter verlaufende Förderkette 3 führt die Druckprodukte 2 nach dem Erfassen über dem Förderband 52 von einer liegenden Position in eine hängende Lage, sodass auf diesem Förderabschnitt 55 die Druckbogen 2 angehoben, geschwenkt und frei hängend resp. durch die Transportbewegung leicht flatternd geöffnet werden, wodurch der Papierstaub oder Papierflocken und andere Teile sich von den Druckprodukten lösen und nach unten fallen und die Fördereinrichtung, auch die Förderkette sowie die Umgebung der Annahmestation belasten. Dagegen ist eine den Förderabschnitt 55 vorzugsweise eng umgebende Kammer 56 vorgesehen, die an eine Vakuumquelle 59 resp. Absaugvorrichtung angeschlossen ist. In einer Verbindungsleitung 59 zwischen Kammer 56 und Absaugvorrichtung 57, oder nach der Absaugvorrichtung 57 ist ein Abscheider, beispielsweise ein Zyklonabscheider zur Trennung des Papierstaubes und anderer die Umgebung belastende Teile vorgesehen.

## Patentansprüche

1. Vorrichtung zur Reinigung einer Fördereinrichtung (1) für Druckprodukte (2), die zur weiteren Verarbeitung in an einem umlaufenden Zugmittel (3) in Abständen hintereinander befestigten, schliess- resp. öffenbaren Klammern (4) im Randbereich einer Bogenkante gehalten und quer zur Förderrichtung (T) ausgerichtet sind, wobei das angetriebene Zugmittel (3) in parallelen Führungsbahnen (5 bis 7 resp. 5' bis 7')einer Führungsanordnung (15) durch frei drehbar gelagerte Laufrollen (13, 14) resp. Laufrollenpaare und/oder Führungsrollen (167) formschlüssig geführt ist, **dadurch gekennzeichnet, dass** in Förderrichtung (T) zwischen zwei Laufrollen (13, 14) resp. Laufrollenpaaren und/oder Führungsrollen (16) wenigstens eine entlang einer Lauf- (24, 25) resp. Führungsfläche (29, 30) der Führungsbahnen (5 bis 7 resp. 5' bis 7') auf diese reinigend wirkende Räumvorrichtung (31, 37, 38) an dem Zugmittel (3) befestigt ist.

2. Vorrichtung nach Anspruch 1, bei der das Zugmittel durch eine aus mehreren gelenkig verbundenen Kettengliedern (8) bestehende Förderkette (3) gebildet ist, die durch den Kettengliedern (8) zugeordnete Laufrollen (13, 14) resp. Laufrollenpaare und/oder Führungsrollen (16) in der die Führungsbahnen (5 bis 7 resp. 5' bis 7') bildenden Führungsanordnung (15) geführt ist, **dadurch gekennzeichnet, dass** wenigstens eine Räumvorrichtung (31, 37, 38) über einer Lauf- resp. Führungsfläche (24, 25; 29, 30) der Lauf- (13, 14) resp. Führungsrollen (16) einer Führungsbahn (5 bis 7 resp. 5' bis 7') und auf diese reinigend wirkend an einem Kettenglied (8) der Förderkette (3) befestigt ist.

3. Vorrichtung nach Anspruch 2, **dadurch gekennzeichnet, dass** die Räumvorrichtung (31, 37, 38) mit statisch oder dynamisch wirkenden Räumelementen (34, 39) ausgebildet ist.

4. Vorrichtung nach Anspruch 3, **dadurch gekennzeichnet, dass** die Räumelemente (34, 39) eine seitliche Förderrichtung (T) erzeugend ausgebildet sind.

5. Vorrichtung nach einem der Ansprüche 2 bis 4, **dadurch gekennzeichnet, dass** jeweils anstelle einer Laufrolle (13, 14) resp. einer Führungsrolle (16) eine Räumvorrichtung (31, 27, 38) an einem Kettenglied (8) der Förderkette (3), vorzugsweise auswechselbar befestigt ist.

6. Vorrichtung nach einem der Ansprüche 2 bis 5, **dadurch gekennzeichnet, dass** die Räumvorrichtung (31, 37, 38) als Bürste wirkend ausgebildet ist.

7. Vorrichtung nach einem der Ansprüche 2 bis 5, **dadurch gekennzeichnet, dass** die Räumvorrichtung (38) als Mitnehmer (39) wirkend ausgebildet ist.

8. Vorrichtung nach den Ansprüchen 6 und 7, **dadurch gekennzeichnet, dass** einer Räumvorrichtung (31, 37, 38) eine einen Mitnehmer (39) aufweisenden Räumvorrichtung (38) nachgeschaltet ist.

9. Vorrichtung nach Anspruch 8, **dadurch gekennzeichnet, dass** die mit einem Mitnehmer (39) versehene Räumvorrichtung (38) an einem dem Kettenglied (8) einer Räumvorrichtung (31, 37, 38) nachfolgenden Kettenglied (8) befestigt ist.

10. Vorrichtung nach einem der Ansprüche 1 bis 9, **dadurch gekennzeichnet, dass** entlang der Führungsanordnung (15) eine auf die Führungsbahnen (5 bis 7 resp. 5' bis 7') wirkende Absaugvorrichtung (35) vorgesehen ist.

11. Vorrichtung nach Anspruch 10, **dadurch gekennzeichnet, dass** entlang der Führungsanordnung (15) wenigstens eine mit der Absaugvorrichtung (35) verbundene Zugangsöffnung (36) in der Führungsanordnung (15) vorgesehen sind.

12. Vorrichtung nach Anspruch 11, **dadurch gekennzeichnet, dass** die Zugangsöffnung (36) an der Seite der Führungsanordnung (15) vorgesehen ist.

13. Vorrichtung nach Anspruch 11, **dadurch gekennzeichnet, dass** bei übereinander beabstandeten Förderkettentrums (40, 41) der umlaufenden Förderkette (3) unterhalb des oberen Förderkettentrums (40) eine Absaugvorrichtung (35) mit einer Zugangsöffnung (36) zur Führungsanordnung (15) hin förderwirksam verbunden ist.

14. Vorrichtung nach Anspruch 13, bei übereinander beabstandeten Förderkettentrums (40, 41), **dadurch gekennzeichnet, dass** wenigstens entlang des oberen Förderkettentrums (40) ein die Fördereinrichtung (1) umgebender Tunnel (42) vorgesehen ist, der mit einer Absaugvorrichtung (35) förderwirksam verbunden ist.

15. Vorrichtung zur Reinigung einer Fördereinrichtung (1) und durch diese transportierte Druckprodukte (2), die zur Verarbeitung an einem umlaufenden Zugmittel (3) in regelmässigen Abständen hintereinander in schliess- und öffenbaren Klammern (4) falzseitig gehalten und quer zur Förderrichtung (T) ausgerichtet sind, wobei das angetriebene Zugmittel (3) in parallelen Führungsbahnen (5 bis 7 resp. 5' bis 7') einer Führungsanordnung (15) durch frei drehbar gelagerte Laufrollen (13, 14) resp. Laufrollenpaare und/oder Führungsrollen (16) formschlüssig geführt ist und eine einer Druckmaschine nachgeschaltete Annahmestation (51) durchläuft, der die Druckprodukte in einem Schuppenstrom falzvoran zugeführt und von Klammern (4) der Fördereinrichtung (1) am Falz erfasst und zum weiteren Transport in eine Hängelage umgelenkt werden, **dadurch gekennzeichnet, dass** der Erfassungs- und in Förderrichtung (T) betrachtet folgende Umlenkabschnitt der Annahmestation (51) durch eine die in Klammern (4) gehaltenen, die Annahmestation (51) durchlaufenden Druckprodukte (2) umgebende, mit einer Vakuumquelle (57) resp. Absaugvorrichtung verbundene Kammer (56) ausgebildet ist.

16. Vorrichtung nach Anspruch 15, **dadurch gekennzeichnet, dass** die Kammer (56) teilweise geschlossen ausgebildet ist.

17. Vorrichtung nach Anspruch 15 oder 16, **dadurch gekennzeichnet, dass** in einer Verbindungsleitung (59) zwischen Kammer (56) und Vakuumquelle (57) oder nach der Vakuumquelle (57) ein Abscheider (58) für Feststoffe angeordnet ist.
